(19) Europäisches Patentamt / European Patent Office / Office européen des brevets

(11) **EP 3 156 773 A1**

(12) **EUROPEAN PATENT APPLICATION**

(43) Date of publication:
**19.04.2017 Bulletin 2017/16**

(21) Application number: **15189575.2**

(22) Date of filing: **13.10.2015**

(51) Int Cl.:
**G01J 3/51** (2006.01)     **G01C 11/02** (2006.01)
**G01J 3/06** (2006.01)     **G01J 3/28** (2006.01)
**G01J 3/36** (2006.01)     **H04N 5/225** (2006.01)
**H04N 5/372** (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **BAE Systems PLC
London SW1Y 5AD (GB)**

(72) Inventor: **The designation of the inventor has not yet been filed**

(74) Representative: **BAE SYSTEMS plc
Group IP Department
Farnborough Aerospace Centre
Farnborough
Hampshire GU14 6YU (GB)**

(54) **MULTISPECTRAL IMAGING OF A SCENE FROM A MOVING VIEWPOINT**

(57)     Apparatus and method are disclosed for the multispectral imaging of features of a scene along an imaging path, from a viewpoint which is arranged to move relative to the scene. The apparatus comprises a first sensing array having a plurality of sensors for acquiring spectral image data of a portion of the scene over a first spectral range and at least one second sensing array having a plurality of sensors for acquiring spectral image data of a portion of the scene over at least one second spectral range. The apparatus further comprises a processor for timing the acquisition of the spectral image data using the sensors of the first sensing array over a first duration, and for timing the acquisition of the spectral image data using the sensors of the at least one second sensing array over at least one second duration, and an integrator for integrating the spectral image data acquired by the plurality of sensors of the first sensing array, and separately, for integrating the spectral image data acquired by the plurality of sensors of the second sensing array. The spectral image data of the portion of the scene is acquired at each sensor of the first and second sensing arrays at temporally separated times within the first and second durations, the temporally separated times being dependent on a relative speed between the viewpoint and the scene, and an angle subtended by a sensor of the associated sensing array and the features within the scene.

Figure 1

**Description**

The present invention relates to a method and apparatus for multispectral imaging of a scene along an imaging path, from a viewpoint which is arranged to move relative to the scene.

Multispectral images of a scene can be acquired by scanning photoconductive sensors across the scene, in a technique commonly known as "pushbroom scanning". This may be achieved by mounting the sensors on a platform capable of moving relative to the scene, such as a surveillance aircraft, or moving objects across the field of view of the sensors. Pushbroom multispectral imaging sensors typically only register one thin line of an image scene at a time. The image is built up by scanning the sensor across the scene, e.g. using a motorised stage or using the motion of an aircraft to scan across the landscape.

When incorporated with aircraft, pushbroom multispectral images are generated by using the forward motion of the aircraft to scan an image sensor across the ground in a swath direction, which is typically perpendicular to the forward motion (track direction). A slit and objective lens is used to project an image of a narrow line on the ground through a wavelength dispersive spectrometer. The geometry is arranged so that the images successively projected are spatial in one direction and spectral in the other.

The spatial resolution of aerial pushbroom multispectral images in the swath direction is determined by the characteristics of the lens optics and camera used. The spatial resolution in the track direction is determined by the speed and height of the aircraft. To create the highest quality imagery for subsequent analysis it is normal to match these two resolutions so that the pixels on the multispectral images are "square".

Spectral resolution is principally determined by the extent of the dispersion produced by the spectrometer compared to the size of the sensor in the track direction. Hence to create well resolved images it is preferable to fly as low and as slow as practically possible.

Military surveillance aircraft cannot generally fly much lower than about 3km because of the threat from small arms fire and remotely piloted grenades. The stall speed of these types of aircraft is usually not less than about 45m/s (~90knots). In practice this puts a lower limit on the angular rate of scan of about 15mrad/s (0.86deg/s). For a frame rate of 50Hz, this is 0.3mrad (0.017deg), or 0.9m from 3km, and as such presents a limit to the spatial resolution attainable.

A further problem associated with pushbroom imaging is that the scan speed required to achieve a particular along track resolution increases in proportion to the aircraft speed and this limits the achievable ground resolution, since the sensor output reduces with the time needed to integrate the output to generate a frame. The sensor output also depends on available light level, pixel size and spectrometer throughput, since the responsivity is roughly proportional to pixel area.

According to a first aspect of the present invention there is provided apparatus for multispectral imaging of features of a scene along an imaging path, from a viewpoint which is arranged to move relative to the scene, the apparatus comprising:

- a first sensing array having a plurality of sensors for acquiring spectral image data of a portion of the scene over a first spectral range;
- at least one second sensing array having a plurality of sensors for acquiring spectral image data of the portion of the scene over at least one second spectral range;
- a processor for timing the acquisition of the spectral image data using the sensors of the first sensing array over a first duration, and for timing the acquisition of the spectral image data using the sensors of the at least one second sensing array over at least one second duration,
- an integrator for integrating the spectral image data acquired by the plurality of sensors of the first sensing array, and separately, for integrating the spectral image data acquired by the plurality of sensors of the second sensing array;
- wherein the spectral image data of the portion of the scene is acquired at each sensor of the first and second sensing arrays at temporally separated times within the first and second durations, the temporally separated times being dependent on a relative speed between the viewpoint and the portion of the scene, and an angle subtended by a sensor of the associated sensing array and the features within the portion of the scene.

In an embodiment, the apparatus further comprises a first spectral filter and at least one second spectral filter for limiting the spectral image data received at the first and at least one second sensing arrays to within the first and at least one second spectral ranges, respectively.

In a further embodiment, the apparatus further comprises a lens arrangement for focussing the features of the scene onto the sensors of the first and at least one second sensing arrays.

In yet a further embodiment, the apparatus further comprises a combiner for combining the spectral images of each portion of the scene, separately acquired by each sensing array, to generate a spectral image of the scene.

In a further embodiment, the apparatus further comprises an image steering arrangement for steering a view of a portion of the scene from a first viewing direction to a second viewing direction relative to the viewpoint, in dependence upon the relative movement, so that a sensor of the sensing arrays can acquire spectral image data of the portion of the scene as the viewpoint moves along the imaging path.

The image steering arrangement may comprise a mirror rotatably mounted for steering a view of the portion of the scene onto the sensor.

The apparatus may further comprise one or more gimbals for mounting the apparatus to the viewpoint, such as an aircraft, to minimise any vibrational movements of the viewpoint being transmitted to the apparatus, and thus to improve the stability of the apparatus.

According to a second aspect of the present invention, there is provided a method for multispectral imaging of features of a scene along an imaging path, from a viewpoint which is arranged to move relative to the scene, the method comprising:

- acquiring spectral image data of a portion of the scene at a plurality of sensors of a first sensing array over a first spectral range, within a first duration, from a viewpoint;
- integrating the spectral image data of the portion of the scene acquired using the first sensing array over the first duration, to generate a spectral image of the portion of the scene over the first spectral range;
- acquiring spectral image data of the portion of the scene at a plurality of sensors of at least one second sensing array over at least one second spectral range, within at least one second duration, from said viewpoint;
- integrating the spectral image data of the portion of the scene acquired using the at least one second sensing array over the at least one second duration, to generate a spectral image of the portion of the scene over the at least one second spectral range;
- wherein the spectral image data of the portion of the scene is acquired at each sensor of the first and second sensing arrays at temporally separated times within the first and second durations, the temporally separated times being dependent on a relative speed between the viewpoint and the portion of the scene, and an angle subtended by a sensor of the associated sensing array and the features within the portion of the scene.

In an embodiment, the first and second time durations are temporally separated by a time which is dependent on a relative speed between the viewpoint and the portion of scene, and an angle subtended by the first and second sensing arrays and the features within the portion of the scene.

In an embodiment, the method further comprises separately combining the spectral images of the portions of the scene acquired using at least one of the first or at least one second sensing array, to generate a spectral image of the scene.

In a further embodiment, the method comprises imaging a portion of the scene at a sensor of at least one of the first or at least one second sensing array from the viewpoint, along a first viewing direction relative to the viewpoint, and redirecting the viewing direction from the first viewing direction to a second viewing direction relative to the viewpoint, to maintain a view of said portion of the scene as the viewpoint moves relative to the scene. Advantageously, the method provides for an increased spatial resolution of the scene by reducing the relative speed between the portion of the scene being imaged and the viewpoint, such as the aircraft, by tracking the location of the portion of the scene as the aircraft moves overhead.

The method preferably further comprises redirecting the viewing direction from the second viewing direction to the first viewing direction, for subsequent acquisition of spectral image data of the portion of the scene from the viewpoint by a further sensor. In an embodiment, the method is arranged to acquire the spectral image data of a portion of a scene from an aerial position, for example using an apparatus according to the first aspect, mounted upon an aircraft. In this respect, the first viewing direction may be a forward direction relative to the aircraft and the second direction may be a less forward direction, or even a rearward direction.

The spectral image data is preferably acquired via a reflecting member, which is arranged to reflect an image of the portion of the scene onto a sensor of at least one of the first or at least one second sensing array. The viewing direction may be varied between the first and second viewing directions by rotating the reflecting member between first and second angular orientations, respectively.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described with reference being made to the accompanying drawings, in which:

Figure 1 is a schematic illustration of an apparatus according to a first embodiment of the present invention;

Figure 2 is a schematic illustration of an apparatus according to a second embodiment of the present invention; and,

Figure 3 is a flowchart illustrating the steps associated with a method according to an embodiment of the present invention.

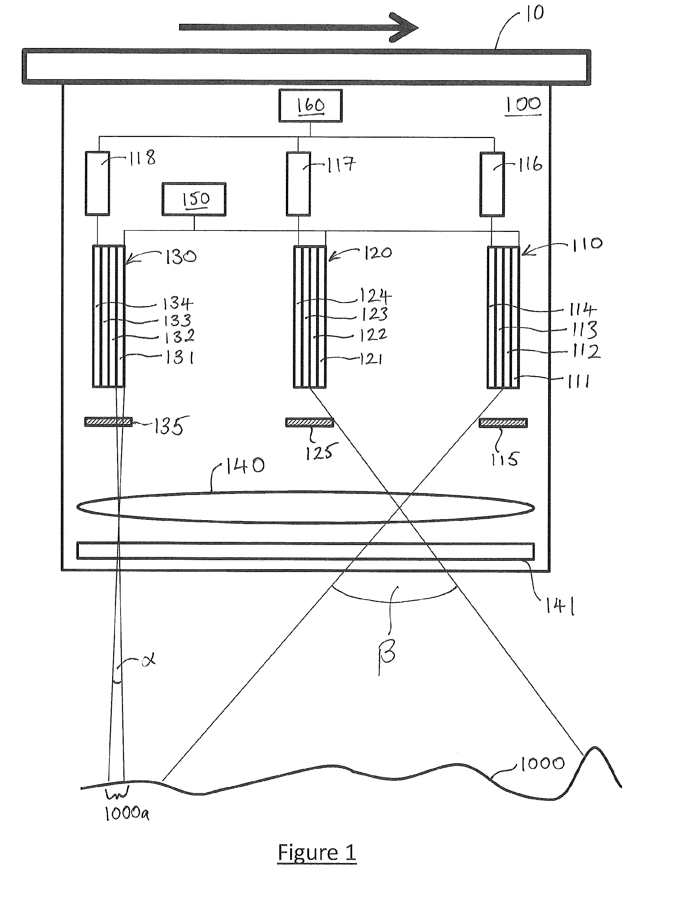

Referring to figure 1 of the drawings there is illustrated an apparatus 100 according to an embodiment of the present invention for the multispectral imaging of features of a scene 1000 along an imaging path, namely a track direction (see arrow A). The apparatus 100 is arranged to move relative to the scene 1000 and image the scene 1000 typically from an aerial position. In this respect, it is envisaged that the apparatus may be mounted to the underside of an aircraft (not shown), for example.

The apparatus 100 comprises a plurality of sensing arrays, each comprising a plurality of sensors. In this illustrated embodiment, the apparatus 100 comprises three sensing arrays 110, 120 ,130 , each array comprising four sensors 111-114, 121-124, 131-134, but the skilled addressee will recognise that different numbers of sensing arrays 110, 120, 130 and different numbers of sensors within each array 110, 120, 130 may be used. The sensors 111-114, 121-124, 131-134 of each array 110, 120, 130 separately comprise a linear arrangement of sensing pixels (not shown) and each sensor of each array 110, 120, 130 is orientated to extend substantially transverse to the track direction, so that each sensor 111-114, 121-124, 131-134 effectively acquires an image of a narrow region or portion of the scene 1000 which extends along a swath direction, which is transverse to the track direction. In an embodiment, the sensing arrays 110, 120, 130 and the sensors 111-114, 121-124, 131-134 of each array, are separated in the direction of the imaging path, such that the sensing arrays 110, 120, 130 and the sensors of each array are arranged to sequentially pass over features of the scene 1000. Each sensing array 110, 120, 130 comprises a spectral filter 115, 125, 135 located between the respective array and the scene 1000 to be imaged, so that the imaging of the scene 1000 by each array takes place over a narrow spectral range. For example, the sensing arrays 110, 120, 130 may be arranged to separately acquire spectral image data of the scene in the blue, green and red regions of the electromagnetic spectrum. In this manner, blue, green and red filters 115, 125, 135 may be respectively placed over sensing arrays 110, 120, 130 to limit the wavelength range of radiation striking the sensors 111-114, 121-124, 131-134. The apparatus 100 further comprises a lens arrangement 140 disposed between the filters 115, 125, 135 and the scene 1000 so that the imaging rays from the scene become suitably focussed at the sensors 111-114, 121-124, 131-134, and collimating optics141 for restricting the imaging to a narrow region of the scene 1000.

The spectral image data of features within a particular portion 1000a of the scene 1000 is acquired at each sensor 111-114, 121-124, 131-134 at a separate time, such that the imaging of a particular portion 1000a by the sensors 111-114, 121-124, 131-134 takes place from substantially the same viewpoint. The spectral data acquired by the sensors 111-114, 121-124, 131-134 is temporally separated by a time which is dependent on the speed of the apparatus 100 relative to the portion 1000a of the scene 1000 and an angle subtended by a pixel (not shown) of the sensors 111-114, 121-124, 131-134 and the features within the portion 1000a of the scene 1000. In a similar manner, given the longitudinal separation of the sensing arrays 110, 120, 130 along the track direction, the spectral data acquired by the sensing arrays 110, 120, 130 is temporally separated by a time which is dependent on the speed of the apparatus 100 relative to the portion 1000a of the scene 1000 and an angle subtended by the arrays 110, 120, 130 and the features within the scene 1000.

The acquisition of the spectral data at each sensor 111-114, 121-124, 131-134 is coordinated by a processor 150 which is communicatively coupled with each sensing array 110, 120, 130. The processor 150 thus ensures that the imaging of a particular feature by the sensors 111-114, 121-124, 131-134 takes place from substantially the same viewpoint relative to the scene.

Each sensing array 110, 120, 130 is also respectively communicatively coupled with an integrator 116, 117, 118, which is arranged to combine the spectral data from each sensor 111-114, 121-124, 131-134 for a particular portion 1000a within the scene 1000 to establish an image for the portion 1000a of the scene 1000 over the spectral range of the array 110, 120, 130, as defined by the filter 115, 125, 135. The integrated image is found to improve the signal-to-noise ratio by a factor of $n^{1/2}$ where n is the number of sensors within each array 110, 120, 130, and thus provides an improved imaging of the scene 1000 in conditions with reduced levels of lighting.

The integrated images of a particular portion of the scene, acquired using a given array 110, 120, 130 may then be combined with other integrated images of other portions acquired using the same array 110, 120, 130, to generate a global integrated image of the entire scene 1000 over the particular spectral range. In a further step, the global integrated images generated by each sensing array may also be combined to generate a global multispectral image of the entire scene 1000.

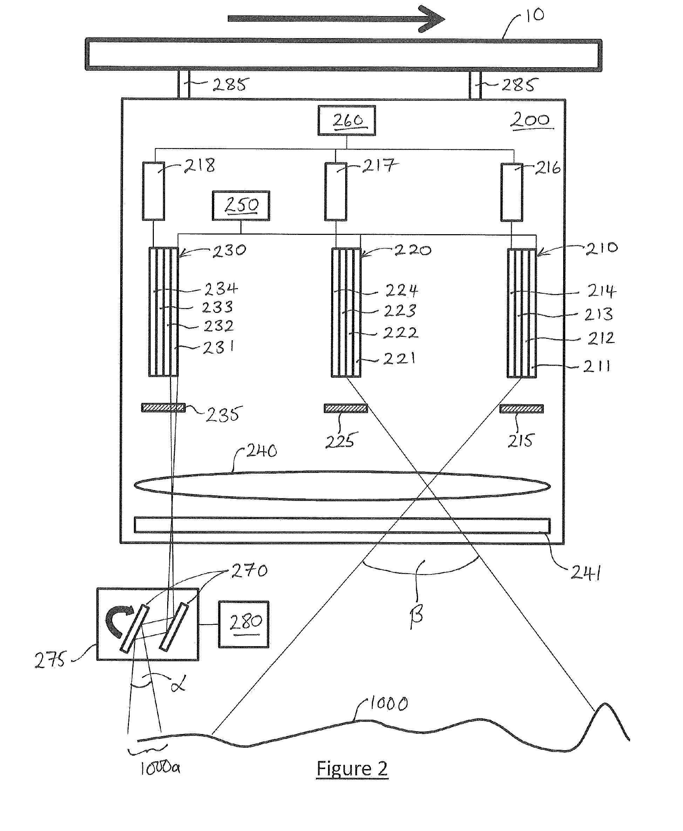

Referring to figure 2 of the drawings, there is illustrated an apparatus 200 for the multispectral imaging of features of a scene 1000 along an imaging path, according to a second embodiment of the present invention. The apparatus 200 is substantially the same as the apparatus 100 of the first embodiment and so like features have been referenced using the same numerals, but increased by 100. The apparatus 200 of the second embodiment differs from that of the first embodiment however, in that the apparatus 200 of the second embodiment further comprises a rotatably mounted mirror 270 and a motorised stage 275 for providing controlled rotations of the mirror 270 so that an image of the portion 1000a of the scene 1000 can be suitably steered onto a sensor 111-114, 121-124, 131-134 of a sensing array 110, 120, 130. Since the maximum angular velocity of the mirror 270 needs only to be small, of the order of 1deg/s, it is envisaged that this rotation may be controlled using a digitally controlled stepper motor280. Moreover, in situations where the apparatus 200 is disposed upon an aircraft10, for example, the apparatus 200 and thus the mirror 270 may be mounted to the aircraft 10 using gyroscopically stabilised gimbals 285 in order to preserve a stability of the apparatus and thus minimise any blurring of the imaged scene which may otherwise occur due to aircraft movement and vibration.

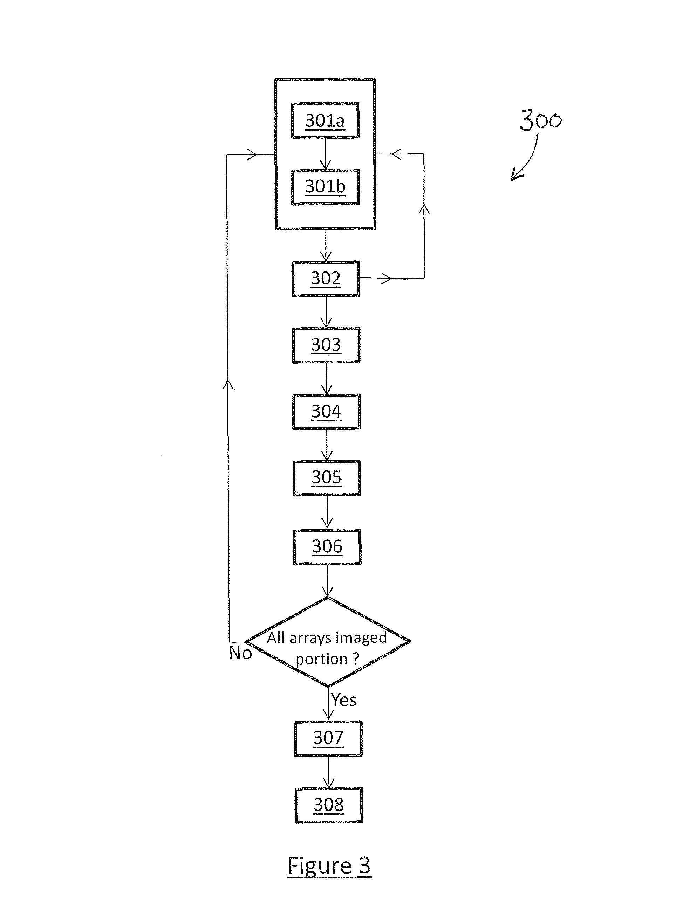

Referring to figure 3 of the drawings, there is illustrated a method 300 for multispectral imaging of features of a scene 1000 along an imaging path according to an embodiment of the present invention. The method 300 comprises the use of an apparatus, such as the apparatus 100 of the first embodiment described above. In use, the apparatus 100 is mounted to the underside of an aircraft10, with the sensing arrays 110, 120, 130 and sensors 111-114, 121-124, 131-134 of each array orientated to extend along the aircraft 10, so that the arrays 110, 120,130 and the sensors 111-114, 121-124, 131-134 of each array sequentially pass over the features of the scene 1000, along the track direction as the aircraft 10 flies overhead.

In use, the leading sensor 111 of the leading sensing array 110 is arranged to acquire an image of a portion of the scene 1000 at step 301, namely a narrow region of the scene 1000 which extends across the track direction. The collimating optics141 and lens arrangement 140 direct the image of the scene portion onto the leading sensor 111 through the respective spectral filter 115, so that the radiation striking the leading sensor comprises a wavelength which is permitted to pass through the filter 115. The spectral data acquired by the leading sensor 111 is then passed to the adjacent sensor 112 in the array 110 at step 302 and a further image of the same portion is acquired by the adjacent sensor 112, at a time determined by the processor 150, so that the adjacent sensor 112 acquires image data of the same portion of the scene 1000. This additional spectral data, in addition to the original spectral data is then passed to the next sensor 113 in the array 110 and the process is repeated until all the sensors 111-114 in the array 110 have acquired image data of the same portion of the scene 1000. The time between successive sensors 111-114 of the array 110 acquiring the image data can be expressed as:

$$t_S = \alpha \, / \, \omega_{air} \qquad (1)$$

where $\alpha$ is the angle subtended by adjacent sensors 111-114 of the array 110 and the features within the portion of the scene 1000, and is defined as the width of a pixel (not shown) of the sensor 111-114 divided by the focal length of the lens arrangement 140, and $\omega_{air}$ is the angular velocity of the aircraft 10 which is defined as the linear speed of the aircraft 10 divided by the altitude.

Once the leading sensor 111 of the array 110 has acquired the image of the portion of the scene 1000 and passed the image data to the adjacent sensor 112, the aircraft 10 and thus the apparatus 100, will have moved along the track direction by a distance determined by the speed of the aircraft 10. Accordingly, the processor 150 is arranged to time the acquisition of image data and the transfer of image data to the next sensor 112 in the array 110, so that each sensor 111-114 acquires the images of the portion of the scene from substantially the same viewpoint. Once a particular sensor 111-114 of the array has transferred the image data of the portion of the scene to an adjacent sensor in the array 110, then the particular sensor is available to image the subsequent portion of the scene 1000, since the aircraft10 would have moved relative to the originally imaged scene portion. In this manner, each portion of the scene is imaged by each sensor 111-114 of the array 110 at separate times in dependence upon the speed of the aircraft 10.

When the last sensor 114 of the leading sensing array 110 has imaged the portion of the scene 1000, then the image data acquired by the last sensor 114, and all the image data of the portion of the scene which has been transferred to the last sensor 114 in the array 110, is output to the integrator 116 at step 303. The integrator 116 subsequently integrates the image data acquired by each sensor 111-114 of the leading array 110, for the particular portion at step 304, to generate a spectral image for that portion at step 305. Successive portions of the scene can be imaged along the track direction in the same manner and the spectral images output by the integrator 116 for each portion can then be combined at a combiner 160 at step 306 to generate a global spectral image of the entire scene, over the spectral range of the spectral filter 115 at step 307.

The leading sensing array 110 is arranged to acquire the spectral image data of a portion of the scene 1000 over a first temporal duration. The adjacent sensing array 120 is thus arranged to acquire image data of the same portion of the scene at a separate time over a second duration, owing to the longitudinal separation of the sensing arrays 110, 120 along the aircraft 10. (However, in an alternative embodiment, it is envisaged that the sensing arrays 110, 120, 130 may be alternatively arranged to extend in a side-by-side arrangement and thus be oriented to extend transverse to the track direction. In this embodiment, it is envisaged that the each sensing array 110, 120, 130 will be able to acquire spectral image data of substantially the same portion of the scene 1000 at the same time). Each subsequent sensing array 120, 130 is arranged to image the same portion of the scene in the same manner as the leading sensing array 110, by performing method steps 301-303. However, each subsequent sensing array 120, 130 commences imaging of the same portion of the scene 1000 at a time which is temporally delayed from the time the preceding sensing array 110, 120 images the portion, by an amount which is dependent on the speed of the aircraft 10 (and thus the apparatus 100) relative to the scene 1000, and the angle subtended by the particular sensing array 120, 130 and the preceding sensing array 110, 120 and the features within the scene 1000. This temporal delay between the arrays ($t_A$) can be expressed as:

$$t_A = \beta \ / \ \omega_{air} \qquad\qquad (2)$$

where $\beta$ is the angle subtended between adjacent sensing arrays 110, 120, 130 and the features within the scene 1000, and is defined as the distance between adjacent arrays 110, 120, 130 divided by the focal length of the lens arrangement 140.

Once the spectral images of the portions of the scene 1000 have been generated at step 305 by each array 120, 130 using the respective integrator 117, 118, the global images for the scene can be generated at steps 306 and 307 for the particular spectral ranges, using the combiner 160. If required, the global spectral images acquired for each spectral range can then be combined to generate a single multispectral image of the scene 1000 at step 308.

In a second embodiment of the method, which comprises the use of the apparatus 200 according to the second embodiment, then as the aircraft 10 is flown over the scene to be imaged, a portion of the image scene is directed onto a sensor 111-114, 121-124, 131-134 of a sensing array 110, 120, 130 via the rotatable mirror 270 to acquire spectral image data of the portion of the scene. As the aircraft 10 continues to move in the track direction, the mirror 270 is arranged to rotate from a first viewing direction of the portion relative to the aircraft 10, which may be forwardly of the aircraft 10, to a second viewing direction, which may be less forwardly or even rearwardly of the aircraft 10 at step 301 a. This tracking of the portion of the scene reduces the relative speed between the aircraft 10 and the portion and enables the aircraft 10 to operate at a reduced height. This effectively increases the time spent acquiring the spectral image data from the portion of the scene, thereby providing an increased image resolution of the scene.

Once the rotatable mirror 270 has rotated to the second viewing direction relative to the aircraft 10, the mirror 270 is required to return to the first viewing direction at step 301 b for subsequent acquisition of image data from a further portion of the scene. During the recovery of the mirror 270 to its original position, the aircraft 10 will continue to move relative to the scene 1000 and as such, this will result in portions of the scene 1000 being unimaged. In order to provide full pushbroom coverage of the scene 1000 at high resolution, it is envisaged that several apparatus 200 according to the second embodiment may be mounted in a side-by-side arrangement and arranged to view different portions of the scene 1000. By directing each mirror 270 of each apparatus 200 in a slightly different position along the track direction, several portions of the scene 1000 could be scanned forward at the same time by an aircraft 10 travelling at a reasonable speed. In this manner, as one mirror 270 recovers to the original position, namely the first viewing direction, following a data acquisition at step 301, a further apparatus 200 may be used to acquire data from the portion which would have otherwise gone unimaged. Calculations show that with four apparatus working in parallel, the ground resolution may be increased by a factor of four without any loss of image pixels.

**Claims**

1.  Apparatus for multispectral imaging of features of a scene along an imaging path, from a viewpoint which is arranged to move relative to the scene, the apparatus comprising:

    - a first sensing array having a plurality of sensors for acquiring spectral image data of a portion of the scene over a first spectral range;
    - at least one second sensing array having a plurality of sensors for acquiring spectral image data of a portion of the scene over at least one second spectral range;
    - a processor for timing the acquisition of the spectral image data using the sensors of the first sensing array over a first duration, and for timing the acquisition of the spectral image data using the sensors of the at least one second sensing array over at least one second duration,

- an integrator for integrating the spectral image data acquired by the plurality of sensors of the first sensing array, and separately, for integrating the spectral image data acquired by the plurality of sensors of the second sensing array;
- wherein the spectral image data of the portion of the scene is acquired at each sensor of the first and second sensing arrays at temporally separated times within the first and second durations, the temporally separated times being dependent on a relative speed between the viewpoint and the portion of the scene, and an angle subtended by a sensor of the associated sensing array and the features within the portion of the scene.

2. Apparatus according to claim 1, further comprising a first spectral filter and at least one second spectral filter for limiting the spectral image data received at the first and at least one second sensing arrays to within the first and at least one second spectral ranges, respectively.

3. Apparatus according to claim 1 or 2, further comprising a lensing arrangement for focussing the features of the scene onto the sensors of the first and at least one second sensing arrays.

4. Apparatus according to any preceding claim, further comprising a combiner for combining the spectral images of each portion of the scene, separately acquired by each sensing array to generate a spectral image of the scene.

5. Apparatus according to any preceding claim further comprising an image steering arrangement for steering a view of a portion of the scene from a first viewing direction to a second viewing direction relative to the viewpoint, in dependence upon the relative movement, so that a sensor of the sensing arrays can acquire spectral image data of the portion of the scene, as the viewpoint moves along the imaging path.

6. Apparatus according to claim 5, wherein the image steering arrangement comprises a mirror rotatably mounted for steering a view of the portion of the scene onto the sensor.

7. Apparatus according to claim 5 or 6, further comprising one or more gimbals for mounting the sensor and steering arrangement to the viewpoint, such as an aircraft, to minimise rotational movements of the sensor and steering arrangement with corresponding movements of the viewpoint.

8. A method for multispectral imaging of features of a scene along an imaging path, from a viewpoint which is arranged to move relative to the scene, the method comprising:

- acquiring spectral image data of a portion of the scene at a plurality of sensors of a first sensing array over a first spectral range, within a first duration, from a viewpoint;
- integrating the spectral image data of the portion of the scene acquired using the first sensing array over the first duration, to generate a spectral image of the portion of the scene over the first spectral range;
- acquiring spectral image data of the portion of the scene at a plurality of sensors of at least one second sensing array over at least one second spectral range, within at least one second duration, from said viewpoint;
- integrating the spectral image data of the portion of the scene acquired using the at least one second sensing array over the at least one second duration, to generate a spectral image of the portion of the scene over the at least one second spectral range;
- wherein the spectral image data of the portion of the scene is acquired at each sensor of the first and second sensing arrays at temporally separated times within the first and second durations, the temporally separated times being dependent on a relative speed between the viewpoint and the portion of the scene, and an angle subtended by a sensor of the associated sensing array and the features within the portion of the scene.

9. A method according to claim 8, wherein the first and second time durations are temporally separated by a time which is dependent on a relative speed between the viewpoint and the portion of the scene, and an angle subtended by the first and second sensing arrays and the features within the portion of the scene.

10. A method according to claim 8 or 9, further comprising separately combining the spectral images of the portions of the scene acquired using at least one of the first or at least one second sensing array, to generate a spectral image of the scene.

11. A method according to any of claims 8 to 10, further comprising imaging a portion of the scene at a sensor of at least one of the first or at least one second sensing array from the viewpoint, along a first viewing direction relative to the viewpoint, and redirecting the viewing direction from the first viewing direction to a second viewing direction relative to the viewpoint, to maintain a view of said portion of the scene as the viewpoint moves relative to the scene.

12. A method according to claim 11, further comprising redirecting the viewing direction from the second viewing direction to the first viewing direction, for subsequent acquisition of spectral image data of the portion of the scene from the viewpoint by a further sensor.

13. A method according to any of claims 11 or 12, wherein the spectral image data is acquired at a sensor of at least one of the first or at least one second sensing array via a reflecting member, which is arranged to reflect an image of the portion of the scene onto a sensor of the sensing arrays.

14. A method according to claim 13, wherein the viewing direction is varied between the first and second viewing directions by rotating the reflecting member between first and second angular orientations, respectively.

Figure 1

Figure 2

300

301a

301b

302

303

304

305

306

All arrays imaged
portion ?

No

Yes

307

308

Figure 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS U. KAMPE ET AL.: "Novel faceted mirror for a pushbroom IR sensor", SPIE, PO BOX 10 BELLINGHAM WA 98227-0010 USA, 2004, pages 85-89, XP040190000, * figures 1,2 * | 1-14 | INV. G01J3/51 G01C11/02 G01J3/06 G01J3/28 G01J3/36 H04N5/225 H04N5/372 |
| X | US 2012/300064 A1 (MANN JULIAN M [US] ET AL) 29 November 2012 (2012-11-29) | 1-4,7-9 | |
| Y | * figure 1 * | 5,6, 11-14 | |
| Y | US 2015/253188 A1 (KILLEY AINSLEY [GB]) 10 September 2015 (2015-09-10) | 5,6, 11-14 | |
| A | * paragraphs [0013] - [0017]; figure 2 * | 7 | |

TECHNICAL FIELDS
SEARCHED      (IPC)

G01J
G01C
H04N

The present search report has been drawn up for all claims

| Place of search | Date of completion of the search | Examiner |
|---|---|---|
| Munich | 13 April 2016 | Rödig, Christoph |

EPO FORM 1503 03.82 (P04C01)

## ANNEX TO THE EUROPEAN SEARCH REPORT
## ON EUROPEAN PATENT APPLICATION NO.

EP 15 18 9575

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2016

| Patent document cited in search report | | Publication date | Patent family member(s) | | Publication date |
|---|---|---|---|---|---|
| US 2012300064 | A1 | 29-11-2012 | EP | 2702375 A2 | 05-03-2014 |
| | | | EP | 2778635 A1 | 17-09-2014 |
| | | | US | 2012293669 A1 | 22-11-2012 |
| | | | US | 2012300064 A1 | 29-11-2012 |
| | | | WO | 2012148919 A2 | 01-11-2012 |
| US 2015253188 | A1 | 10-09-2015 | AU | 2013328494 A1 | 30-04-2015 |
| | | | EP | 2904358 A1 | 12-08-2015 |
| | | | GB | 2506687 A | 09-04-2014 |
| | | | US | 2015253188 A1 | 10-09-2015 |
| | | | WO | 2014057242 A1 | 17-04-2014 |

EPO FORM P0459

For more details about this annex : see Official Journal of the European Patent Office, No. 12/82